# EUROPEAN PATENT SPECIFICATION

(11) **EP 1 799 723 B1**
(45) Date of publication and mention of the grant of the patent: **17.12.2008**
(21) Application number: 05789773.8
(22) Date of filing: 07.10.2005
(51) Int. Cl.: C08F 6/28, C08J 3/20, B01F 3/10, B01F 3/20, B01F 3/22, C08F 112/08

(54) **METHOD FOR THE DOSING OF ADDITIVES INTO POLYMER MELTS**
VERFAHREN ZUM ZUDOSIEREN VON ADDITIVEN ZU POLYMERSCHMELZEN
PROCEDE DE DOSAGE D'ADDITIFS DANS DES MATIERES FONDUES POLYMERES

(30) Priority: 12.10.2004 DE 102004049768
(43) Date of publication of application: 27.06.2007
(73) Proprietor: INEOS EUROPE LIMITED, Lyndhurst, Hampshire, SO43 7FG (GB)
(72) Inventor: KRAPPITZ, Werner, 48249 Dulmen (DE); KOHAUS, Herbert, 45772 Marl (DE); SCHMIDT, Frank, 45359 Essen (DE); STRECKER, Claus, 45888 Gelsenkirchen (DE); WIESWEG, Martin, 48734 Reken (DE); TERLAU, Klaus, 48249 Dulmen (DE)
(74) Representative: Preece, Michael
(86) International application number: PCT/GB2005/003861
(87) International publication number: WO 2006/040523

(56) References cited:
- EP-A- 0 348 907
- WO-A-91/16189
- US-B1- 6 365 710

## Description

The invention relates to a method for the feeding, in particular the homogeneous feeding of additives, such as e.g. antistatics, dyes, nanocomposites, carbon in various modifications, processing aids (zinc stearate, antioxidants) in the form of solutions, dispersions or emulsions, into polymer melts.

The introduction of additives into polymer melts has been practised for a long time in order to improve the processing and use properties of polymers. Thus paraffin oil, for example, is added to polystyrene in order to enhance the latter's flow properties.

This can take place during the polymerisation, for instance by the addition of paraffin oil to a reactor in a continuously operated series of stirred-tank reactors, such as are described in text-books on polymer chemistry and in the "Kunststoff-Handbuch" [(Publ.: Becker/Braun) 4. Polystyrene (Ed.: Gausepohl/Gellert) Hanser 1996]. The disadvantage of this method lies in the residence time distribution of a series of stirred-tank reactors, which leads at a grade change to large amounts of the wrong type of off grade product. Transitional material is also obtained during polymerisation in tubular and tower reactors. It is therefore advantageous to introduce the additive into the process as late as possible, in which case the problem becomes even more complicated in process engineering terms because of the large viscosity differences between the components.

It has therefore been proposed to pre-mix the low-viscosity liquid in a side flow of the high-viscosity liquid. Such a method is described in DE-PS 2315114. The pre-mixing takes place with the aid of a dynamic mixer before side flow and main flow are then combined in a static mixer. According to the teaching of DE-PS 2315114 the mixing result is not satisfactory with the exclusive use of static mixers.

The use of dynamic mixers with moving parts is furthermore cost- and maintenance-intensive, and in addition damage to the polymer can occur due to the high shear forces occurring.

It is known from EP 0 472 491-B1 for example to add 4 to 6 per cent of mineral- /paraffin oil to a polystyrene melt by means of a laminar mixing device and to dissolve it therein.

The dyeing of plastics or impact strength modification with impact strength modifiers such as EPDM (ethylene-propylene-diene elastomers) also preferably takes place by the combining of polymer and additive after conclusion of the polymerisation, for example by compounding. So-called master batches or concentrates are mostly used for this, which in turn likewise represent a compound. Said methods are accordingly time- and cost-intensive and are carried out today more and more in special compounding units, and no longer on the polymer manufacturer's premises.

Further additives for polystyrenes, known e.g. from EP 0 668 139-A1 (in this case for expendable polystyrene EPS) can be inter alia flame retardants, e.g. bromine compounds, lubricants, for example oils and stearic acid derivatives, dyes, antioxidants, plasticisers etc..

Further additives to polymers are e.g. antistatics. In many cases they simply make the printing of finished parts possible or protect against static charging, which in the case of vending machine beakers, for example, makes separation of the latter difficult. Antistatics can also be worked into the polymer matrix by compounding via extruders.

In addition it is known from the prior art to degas polymer melts, in particular polystyrene melts, by means of so-called stripping agents and to secure a reduction of the residual volatile matter, in particular monomers.

Such a stripping agent can be for example water, or alternatively ethanol, methanol, nitrogen or an alkane such as propane or butane. In principle largely inert substances are usable which are in liquid form under the addition conditions and degas in the expansion part of the plant. Accordingly e.g. carbon dioxide, dinitrogen oxide, carbon disulfide, aliphatic hydrocarbons, halogenated hydrocarbons or aromatic hydrocarbons would also be considered. Mixtures of a plurality of such stripping agents can also be used. Typically the main function of said stripping agents is the reduction of the volatile matter in polymers. Descriptions of said use are found in the conference book "Degassing during the production and preparation of plastics", VDI Verlag 1992.

It is known from EP 0 584 916-B1 to degas polymer melts by means of water. For this, water is sprayed into the melt and distributed in the melt for example by means of a static mixer. The polymer melt is then passed through a flash chamber degasser, from which a vapour phase containing water, monomer and solvent is stripped off under vacuum.

The object of the present invention is to provide a technically improved and economic method of introducing additives into polymer melts.

It has now been found, surprisingly, that the addition of additives to polymer melts is possible in a technically elegant manner and with the aid of static mixers, and leads to unblemished end products, if the additives are introduced into the polymer melt together with a stripping agent.

The object set was therefore achieved by a method according to claim 1.

A method for the simultaneous adding to and purifying of a polymer or polymer mixture is involved here, to which is fed in the molten state under pressure first of all a stripping agent, which is finely distributed in the melt and which is then removed again in a degassing chamber under vacuum. By purifying is to be understood in this connection mainly the removal of volatile matter. There are stripped out during the above-mentioned vacuum treatment other volatile materials, in particular mono-, di- and trimers, which after the production of the polymer or polymer mixture are present. The invention is characterised by the fact that additives are mixed with the stripping agent fed to the melt. The improvement compared with the state of the art known to date consists mainly in the fact that the additives supplied are not supplied to the melt separately but together with the stripping agent. No further addition device is therefore required for the adding of the additives.

The homogeneous incorporation of additives such as e.g. antistatics, dyes, nanocomposites, plasticisers, pigments, impact strength modifiers, such as EPDM, carbon in various modifications, processing aids (zinc stearate, antioxidants) in the form of solutions, dispersions or emulsions therefore takes place in the claimed method by the simultaneous addition of one or more of said additives and one or more stripping agents suitable for the intensive degassing of the polymer melt. Preferably the additive is distributed homogeneously in the stripping agent during the addition to the melt. This is advantageous in order also to achieve as homogeneous a distribution in the melt as possible. Depending on the physical properties of the additive and the stripping agent, e.g. the polarity or the solubility of the additive in the stripping agent, the additive is preferably dissolved, dispersed or emulsified in the latter, those dispersions or emulsions which are stable over a prolonged period being preferred.

The polymer or polymer mixture is preferably a thermoplastic resin which can be converted into a melt without difficulty or already occurs as a melt during its production. Such a thermoplastic resin can be worked and processed according to the conventional methods known to the skilled man for the further processing of high-viscosity liquids, in particular polymer melts. The method according to the invention is particularly suitable for thermoplastic resins with polystyrene as main component.

A thermoplastic resin can be produced e.g. according to known methods by polymerisation in a series of stirred-tank reactors or in tubular or tower reactors (both vertically and horizontally). Degassing then conventionally takes place after suitable pre-heating in a heat exchanger in a 1st degassing stage, preferably at a pressure of 3 to 30 mbar, to a residual monomer content < 3000 ppm, preferably less than 1000 ppm. This corresponds to the residual monomer content prior to the purifying mentioned in claim 1.

The polymer melt then is preferably at temperatures of 200 to 260 °C. Said melt can then be fed to a static mixer customary in the trade (e.g. Kenics, BE.ST, Sulzer) for the feeding in and incorporation of a stripping agent or stripping agent mixture for the intensive degassing. There then preferably takes place in said mixer the distribution of the introduced stripping agent plus additive in the melt.

The stripping agent or stripping agent mixture typically comprises up to 5 wt % (with respect to the polymer), in particular up to 3 wt % and particularly preferably up to 2 wt %. At the same time together with said stripping agent or stripping agent mixture the additives described are charged in and intermixed, preferably up to three times the weight of the total stripping agent, water proving to be a particularly suitable stripping agent because of its polar properties.

The feeding of the stripping agent/additive mixture into the melt flow takes place via at least one feed-in point upstream of the static mixer, preferably under a pressure of from 20 to 150 bar, in particular from 30 to 120 bar and particularly preferably from 30 to 100 bar. The feeding device can be either a nozzle with non-return valve and shut-off device supplied by the mixer manufacturers or else simply a sufficiently stable tube for the flowing against melt with shut-off device.

In the static mixer the uniform/homogeneous distribution of the stripping agent/additive mixture takes place in liquid phase in the form of extremely fine droplets. The polymer melt mixture so obtained is conventionally expanded at the end of the mixing zone into the vacuum of the 2nd degassing stage for the intensive degassing. At the same time the stripping agent or stripping agent mixture is completely removed, preferably at 15 to 100 mbar, in particular 15 to 70 mbar, preferably at 20 to 30 mbar, while the additive or additive mixture remains homogeneously distributed in the polymer melt flow. After the purifying (intensive degassing) the temperature of the melt is conventionally in a range of 190 - 260 °C and can be further processed, e.g. be subjected to granulation.

It is possible with the method according to the invention to intermix in the manner described virtually all additives that are conventionally added to polymers. These are in particular additives such as flame retardants, lubricants, antioxidants, plasticisers, pigments, nanocomposites, carbon in various modifications, dyes or in particular antistatics. The method is particularly suitable for the addition of a secondary alkyl sulfonate as an antistatic, in particular if the stripping agent is water.

A particular advantage of this invention is that it makes do without cumbersome and cost-intensive process engineering steps and can be integrated seamlessly into existing production plants.

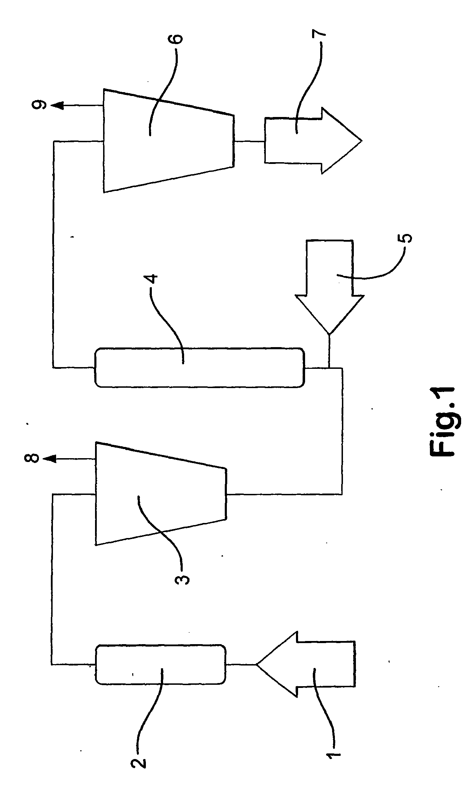

Figure 1 shows diagrammatically a method as described above.

A polymer melt (1) is produced by polymerisation in a series of stirred-tank reactors or in a tubular or tower reactor and after pre-heating in a heat exchanger (2) fed to a first degassing stage (3). The feeding in of the stripping agent/additive mixture takes place at a feed-in point (5) before the melt arrives in the static mixer (4). After the second degassing stage (6) the melt (7) liberated substantially of residual volatile matter is subjected to further processing. The drawn-off gas leaves the degassing stages via lines (8) and (9), respectively.

### Example

The following example represents a possible embodiment of the method as described above and was carried out in a plant as shown in Figure 1.

An aqueous dispersion (solution/paste) of an antistatic (secondary alkyl sulfonate) was kept ready in a pressureless receiving tank and fed by means of a geared pump via an electrically-heated ring pipe with pressure build-up to a piston diaphragm metering pump.

Said metering pump normally used for the metering of demineralised water requires, because of the higher viscosity of the dispersion of the antistatic in demineralised water, a minimum suction pressure of > 4 bar in order to ensure a trouble-free metering with the required pressure build-up of 50 bar.

The piston diaphragm pump forces the aqueous dispersion of the antistatic through a heat exchanger heated with thermal oil and then via an electrically heated high-pressure line to the water injection nozzles of a static mixer.

Said static mixer (ex Sulzer) is traversed by polystyrene-polymer melt with residual monomer contents < 1000 pm and serves for the homogeneous distribution of approx. 2 wt % (with respect to the polymer melt) of demineralised water into extremely fine droplets, which then during the expansion in the subsequent degassing chamber ensure, by foam formation, short diffusion paths and a drop in the partial pressures and hence support in particular the intensive degassing of the polymer melt.

It was found that it is possible by means of said static mixer, in addition to water incorporation, to simultaneously work 2 wt % (with respect to the polymer melt) of the antistatic into the polystyrene-polymer melt homogeneously and without damage. This is illustrated first and foremost by a problem-free strand pelletisation (no, strand breakage and foam formation on the cooling baths) and product analysis.

## Claims

1. Method for the purifying of a polymer or polymer mixture, to which is fed in the molten state under pressure first of all a stripping agent, which is finely distributed in the melt and which is then removed again in a degassing chamber under vacuum, there being stripped out also other volatile materials, in particular mono-, di- and/or trimers, which are present after the production of the polymer or polymer mixture, **characterised in that** one or more additives are mixed with the stripping agent fed to the melt.

2. Method according to claim 1, **characterised in that** the polymer or polymer mixture is a thermoplastic resin, preferably with polystyrene as main component.

3. Method according to claim 1 or 2, **characterised in that** the additives are one or more of flame retardants, lubricants, antioxidants, plasticisers, pigments, impact strength modifiers, nanocomposites, carbon in various modifications, dyes and antistatics.

4. Method according to at least one of the preceding claims, **characterised in that** the additive is distributed homogeneously in the stripping agent.

5. Method according to at least one of the preceding claims, **characterised in that** the additive is dissolved, dispersed or emulsified in the stripping agent.

6. Method according to at least one of the preceding claims, **characterised in that** the total amount of stripping agent introduced comprises up to 5 wt %, in particular up to 3 wt %, and particularly preferably up to 2 wt % (with respect to the weight of the polymer or polymer mixture).

7. Method according to at least one of the preceding claims, **characterised in that** the weight of additive contained in the stripping agent corresponds to not more than three times the weight of the stripping agent introduced.

8. Method according to at least one of the preceding claims, **characterised in that** the stripping agent together with the additive is introduced into the melt at a pressure of 20 - 150 bar, in particular 30 - 120 bar particularly 30 - 100 bar.

9. Method according to at least one of the preceding claims, **characterised in that** the distribution of the stripping agent plus additive in the melt takes place by means of a static mixer.

10. Method according to at least one of the preceding claims, **characterised in that** the stripping agent plus additive is introduced into the apparatus in which the melt is flowing via at least one feed-in point.

11. Method according to at least one of the preceding claims, **characterised in that** the stripping agent is water.

12. Method according to at least one of the preceding claims, **characterised in that** the melt possesses prior to the introduction of the stripping agent/additive composition a residual monomer content of less than 3000 ppm, preferably less than 1000 ppm.

13. Method according to at least one of the preceding claims, **characterised in that** the antistatic is a secondary alkyl sulfonate.

## Patentansprüche

1. Verfahren zur Reinigung eines Polymers oder Polymergemisches, welchem in geschmolzenem Zustand unter Druck zuerst ein Abziehhilfsmittel zugeführt wird, das in der Schmelze fein verteilt wird und das dann in einer Entgasungskammer unter Vakuum wieder entfernt wird, wobei auch andere flüchtige Materialien, insbesondere Mono-, Di- und/oder Trimere, die nach der Erzeugung des Polymers oder Polymergemisches vorliegen, ausgetrieben werden, **dadurch gekennzeichnet, daß** ein oder mehrere Additiv(e) mit dem der Schmelze zugeführten Abziehhilfsmittel gemischt wird/werden.

2. Verfahren nach Anspruch 1, **dadurch gekennzeichnet, daß** das Polymer oder Polymergemisch ein thermoplastischer Kunststoff, vorzugsweise mit Polystyrol als Hauptkomponente, ist.

3. Verfahren nach Anspruch 1 oder 2, **dadurch gekennzeichnet, daß** die Additive eines oder mehrere von Flammhemmern, Schmiermitteln, Antioxidationsmitteln, Weichmachern, Pigmenten, Schlagfestigkeitsmodifikatoren, Nanokompositen, Kohlenstoff in verschiedenen Modifikationen, Farbstoffen und Antistatika sind.

4. Verfahren nach mindestens einem der vorhergehenden Ansprüche, **dadurch gekennzeichnet, daß** das Additiv homogen in dem Abziehhilfsmittel verteilt wird.

5. Verfahren nach mindestens einem der vorhergehenden Ansprüche, **dadurch gekennzeichnet, daß** das Additiv in dem Abziehhilfsmittel gelöst, dispergiert oder emulgiert wird.

6. Verfahren nach mindestens einem der vorhergehenden Ansprüche, **dadurch gekennzeichnet, daß** die Gesamtmenge des eingeführten Abziehhilfsmittels bis zu 5 Gew.-%, insbesondere bis zu 3 Gew.-% und besonders bevorzugt bis zu 2 Gew.-% (in bezug auf das Gewicht des Polymers oder Polymergemisches), umfaßt.

7. Verfahren nach mindestens einem der vorhergehenden Ansprüche, **dadurch gekennzeichnet, daß** das Gewicht des Additivs, das in dem Abziehhilfsmittel enthalten ist, nicht mehr als dem dreifachen des Gewichtes des eingeführten Abziehhilfsmittels entspricht.

8. Verfahren nach mindestens einem der vorhergehenden Ansprüche, **dadurch gekennzeichnet, daß** das Abziehhilfsmittel zusammen mit dem Additiv in die Schmelze bei einem Druck von 20 - 150 bar, insbesondere 30 - 120 bar, speziell 30-100 bar, eingeführt wird.

9. Verfahren nach mindestens einem der vorhergehenden Ansprüche, **dadurch gekennzeichnet, daß** die Verteilung des Abziehhilfsmittels plus Additiv in der Schmelze mittels eines statischen Mischers stattfindet.

10. Verfahren nach mindestens einem der vorhergehenden Ansprüche, **dadurch gekennzeichnet, daß** das Abziehhilfsmittel plus Additiv in die Vorrichtung, in der die Schmelze fließt, über mindestens einen Einspeisepunkt eingeführt wird.

11. Verfahren nach mindestens einem der vorhergehenden Ansprüche, **dadurch gekennzeichnet, daß** das Abziehhilfsmittel Wasser ist.

12. Verfahren nach mindestens einem der vorhergehenden Ansprüche, **dadurch gekennzeichnet, daß** die Schmelze vor dem Einführen der AbziehhilfsmütellAdditivzusammensetzung einen Restmonomergehalt von weniger als 3000 ppm, vorzugsweise weniger als 1000 ppm, hat.

13. Verfahren nach mindestens einem der vorhergehenden Ansprüche, **dadurch gekennzeichnet, daß** das Antistatikum ein sekundäres Alkylsulfonat ist.

## Revendications

1. Procédé de purification d'un polymère ou mélange de polymère, dans lequel est délivré à l'état fondu sous pression avant tout un agent de décapage, qui est finement distribué dans la matière fondue et qui est ensuite de nouveau éliminé dans une chambre de dégazage sous vide, d'autres matériaux volatils y étant également éliminés par décapage, en particulier les mono, di et/ou trimères, qui sont présents après la production du polymère ou mélange de polymère, **caractérisé en ce qu'**un ou plusieurs additifs sont mélangés avec l'agent de décapage délivré dans la matière fondue.

2. Procédé selon la revendication 1, **caractérisé en ce que** le polymère ou mélange de polymère est une résine thermoplastique, de préférence avec du polystyrène en tant que composant principal.

3. Procédé selon la revendication 1 ou 2, **caractérisé en ce que** les additifs sont un ou plusieurs éléments parmi les ignifuges, les lubrifiants, les antioxydants, les plastifiants, les pigments, les modificateurs de résistance à l'impact, les nanocomposites, le carbone dans diverses modifications, les teintes et les antistatiques.

4. Procédé selon au moins l'une des revendications précédentes, **caractérisé en ce que** l'additif est distribué de façon homogène dans l'agent de décapage.

5. Procédé selon au moins l'une des revendications précédentes, **caractérisé en ce que** l'additif est dissous, dispersé ou émulsifié dans l'agent de décapage.

6. Procédé selon au moins l'une des revendications précédentes, **caractérisé en ce que** la quantité totale d'agent de décapage introduite comprend jusqu'à 5 % en poids, en particulier jusqu'à 3 % en poids, et de manière particulièrement préférée jusqu'à 2 % en poids (par rapport au poids du polymère ou mélange de polymère).

7. Procédé selon au moins l'une des revendications précédentes, **caractérisé en ce que** le poids d'additif contenu dans l'agent de décapage correspond à pas plus de trois fois le poids de l'agent de décapage introduit.

8. Procédé selon au moins l'une des revendications précédentes, **caractérisé en ce que** l'agent de décapage conjointement à l'additif est introduit dans la matière fondue à une pression de 20 à 150 bars, en particulier de 30 à 120 bars, spécialement de 30 à 100 bars.

9. Procédé selon au moins l'une des revendications précédentes, **caractérisé en ce que** la distribution de l'agent de décapage et de l'additif dans la matière fondue se produit au moyen d'un mélangeur statique.

10. Procédé selon au moins l'une des revendications précédentes, **caractérisé en ce que** l'agent de décapage et l'additif sont introduits dans l'appareil dans lequel la matière fondue s'écoule par le biais d'au moins un point d'alimentation.

11. Procédé selon au moins l'une des revendications précédentes, **caractérisé en ce que** l'agent de décapage est l'eau.

12. Procédé selon au moins l'une des revendications précédentes, **caractérisé en ce que** la matière fondue possède, avant l'introduction de la composition d'agent de décapage/additif, une teneur en monomère résiduelle inférieure à 3 000 ppm, de préférence inférieure à 1 000 ppm.

13. Procédé selon au moins l'une des revendications précédentes, **caractérisé en ce que** l'antistatique est un sulfonate d'alkyle secondaire.
